# EUROPEAN PATENT APPLICATION

(11) **EP 1 529 859 A2**
(43) Date of publication of application: **11.05.2005**
(21) Application number: 04466028.0
(22) Date of filing: 03.11.2004
(51) Int. Cl.: D01G 15/88, D01G 11/04

(54) **Feeding of textile and similar materials to working means of device for fibre production**

(30) Priority: 06.11.2003 CZ 20033013
(71) Applicant: Rieter CZ a.s., 562 01 Usti nad Orlici (CZ)
(72) Inventor: Appeltauer, Jiri, 56401 Zamberk (CZ); Maixner, Vaclav, 56102 Dolni Dobrouc (CZ); Hajek, Jaroslav, 56181 Kunvald (CZ); Janosik, Stefan, 56423 Zamberk (CZ); Mlynar, Vaclav, 56401 Zamberk (CZ)
(74) Representative: Musil, Dobroslav, Dipl.-Ing.

(57) **Abstract**

The invention relates to a method and a device for feeding textile and/or similar materials, in particular materials of a high consistency intended for recycling with using the recycle as a basic material for textile and/or similar materials production, to working means of a device for fibers production, while the processed material fed to the first opening and cleaning compartment (2) of the device for fibers production is during feeding actively held-down by the surface of a feeding roller (13) and consequently are by an opener roller (21) opened also the end parts of the material shorter than the distance between a grip line (15) and the opener roller (21) of the first opening and cleaning compartment (2) is. Device for feeding the processed material consists of a feeding device (1) comprising the feeding roller (13) on its circumference fitted with one or more rows of feeding teeth (131) or a continuous spiral composed of a row of feeding teeth (131), whose faces are oriented in the direction of the feeding roller (13) rotation, while the surface of the feeding roller (13) is fitted in addition to the feeding teeth (131) with holding-down teeth (132) and/or holding-down heads (1332) of double teeth (133), whose backs are oriented in the direction of the feeding roller (13) rotation.

## Description

### Technical field

The invention relates to a method and a device for feeding textile and similar materials, in particular with a high consistency intended for recycling with using the recycle as a basic material for textile and similar materials production, to working means of a device for fibers production.

### Background art

Economic and ecological reasons lead to determination to use disposed products from various product areas for a new production, thus to return these products back to the processing of a basic material gained by their recycling. In the textile industry this is among others the question of fabrics, knitted fabric, covers consisting of textile fibers recycling and the like.

For successful recycling of planar textile formations of a generally high consistency must be reached a condition that in the first step of their opening we get as far as possible minimally damaged fibers.

At the entry end to known opening and cleaning devices, for instance according to CZ 284 124 is found a feeding device and immediately following feeding device, whose function is to supply processed material to an opener roller of the opening and cleaning device.

Known feeding devices as a rule consist of one feeding roller, whose circumference is fitted with feeding teeth and a holding-down member is adjacent to the feeding roller. During the operation of the feeding device are the feeding teeth sunk into the fed material and by an effect of adhesion while rotating they shift the material in desired direction. The feeding teeth are formed so that the adhesion between the surface of the feeding roller and the material is higher in the direction of feeding than in opposite direction, in which the opener roller with circumferential speed higher than the circumferential speed of the feeding roller tend to draw the material out from the feeding mechanism. The opener roller performs the task of opening the processed material then, when it does not draw the processed material out from the feeding device, thus only if this material is of a low consistency, in particular of a low strength and thus low resistance against opening.

Planar textile formations such as fabrics, knitted fabrics and the like, which can represent recycles and as a rule reinforced end parts of products from materials of a common strength exhibit on the contrary high consistency and obtaining fibers from them can be inconvenient. In this case are the adhesive forces between means of the opener roller and the material being opened higher than between the means of the feeding roller and the fed material, resulting in that the means of the opener roller do not open the material but draw it in a higher speed out from the feeding roller.

During feeding the material of a high consistency are between the fed material and a face of the feeding tooth, whose shape corresponds to the background art, generated forces, which the fed material push into the space of the face of the feeding tooth, which after some time causes choking of the feeding roller and machine operation cut-off. In addition such shape of the tooth causes that the fed material is by the feeding teeth conveyed longer than it is appropriate for the desired function of the following opener roller, this disadvantage increases with increasing material feeding speed.

The goal of the invention intends to eliminate or at least to significantly minimize the drawbacks of the art.

### Principle of the invention

The goal of the invention has been reached by a method for feeding textile and similar materials, in particular materials of a high consistency intended for recycling with using the recycle as a basic material for textile and similar materials production, to working means of a device for fibers production, characterized in that the processed material fed to the first opening and cleaning compartment of the device for fibers production is during feeding actively held-down by the surface of a feeding roller and consequently are by an opener roller opened also the end parts of the material shorter than the distance between a grip line and the opener roller of the first opening and cleaning compartment is.

The principle of the device for carrying out the method of feeding textile and similar materials to the working means of the device for fibers production, whose part is a feeding device comprising the feeding roller on its circumference fitted with one or more rows of feeding teeth or a continuous spiral composed of a row of feeding teeth, whose faces are oriented in the direction of the feeding roller rotation consists in that the surface of the feeding roller is fitted in addition to the feeding teeth with holding-down teeth, whose backs are oriented in the direction of the feeding roller rotation or it is fitted with double teeth, where each of which contains two heads, while the faces of the feeding heads and the backs of the holding-down heads are oriented in the direction of the feeding roller rotation. At least some teeth can have a shape of double teeth containing two heads, while the faces of the feeding heads and the backs of the holding-down heads are oriented in the direction of the feeding roller rotation. Such arrangement of the teeth on the feeding roller circumference serves by means of appropriately shaped feeding teeth for conveying the processed material to the opening and cleaning mechanism, while the holding-down teeth with their back oriented in the direction of the feeding roller rotation or the holding-down heads of the double teeth, whose backs are oriented in the direction of the feeding roller rotation prevent drawing the material off the feeding device by the opener roller and thus enable opening the material by the opening and cleaning mechanism also during processing the recycles formed by planar textile formations of a high consistency and strength or whose end parts are of a high consistency and strength.

### Description of the drawing

Examples of embodiment of a device for carrying out the method of feeding textile and similar materials of a high consistency intended for recycling with using the recycle as a basic material for textile production to working means of a device for fibers production according to the invention are shown in the drawings, where the Fig. 1 represents a diagram of arrangement of an opening and cleaning machine, Fig. 2 represents a schematic section of a feeding teeth of a feeding roller profile according to the background art, Fig. 3 and 4 represent an alternative embodiment of feeding and holding-down teeth of the feeding roller according to the invention.

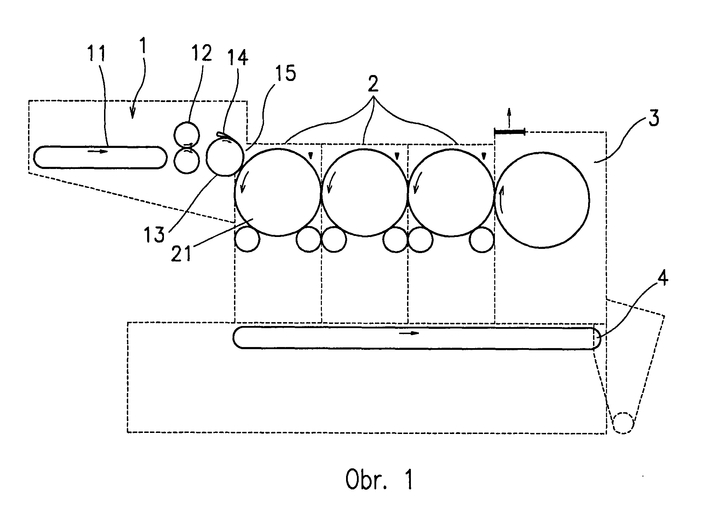

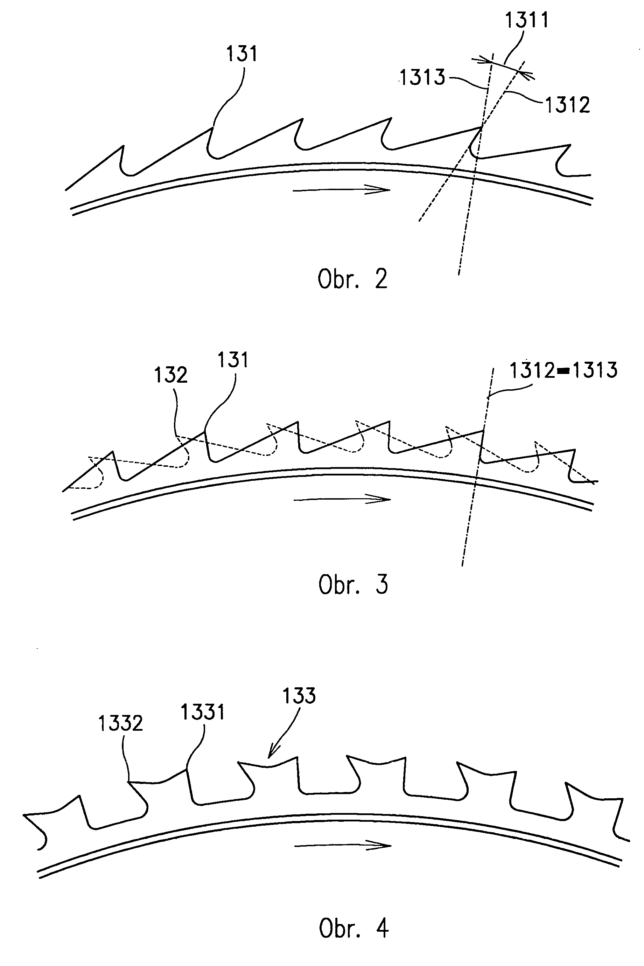

### Specific description

A device for feeding recyclable materials to working means of a device for fibers production is arranged in the entry end of the device for fibers production, which is in the example of embodiment represented by an opener and cleaning machine (for instance according to CZ 284 124).

Device for fibers production comprise a feeding device **1,** a number of opening and cleaning compartments **2,** an outlet compartment **3** and an impurities removal device **4.**

The feeding device consists of a feeding belt **11,** a hard impurities detector **12** fed together with the recycled material and a feeding roller **13** with a holding-down member **14.**

Each opening and cleaning compartment comprise an opener roller **21.**

The feeding roller **13** according to the background art is on its circumference fitted with feeding teeth **131,** the feeding roller **13** is according to the invention in examples of embodiment on its circumference fitted not only with feeding teeth **131** but also with holding-down teeth **132** or is on its circumference fitted with double teeth **133.** Every double teeth **133** has a feeding head **1331** oriented by its face in the direction of rotation of the feeding roller **13** and a holding-down head **1332** oriented by its back in the direction of rotation of the feeding roller **13.**

According to the invention have the feeding and holding-down teeth or their heads advantageously saw-tooth shape and their slanting heads are oriented in case of the feeding teeth **131** or feeding heads **1331** of the double teeth **133** in the direction of rotation of the feeding roller **13,** in the case of the holding-down teeth **132** or holding-down heads **1332** of the double teeth **133** opposite the direction of the feeding roller **13** rotation.

According to the background art the feeding teeth **131** of the feeding roller **13** move the processed material towards an opener roller **21** of the first opening and cleaning compartment **2,** whose axis is parallel to the axis of the feeding roller **13** and which is rotating in the direction of movement of the supplied material, while its circumferential speed is higher than the circumferential speed of the feeding roller **13**.

The circumference of the opener roller **21** is fitted with lugs (e.g. shaped as saw-teeth or needles), by which it pulls out single fibers or parts of the processed material from a grip line **15** formed between the surface of the feeding roller **13** and a holding-down member **14.** This happens only on condition of low consistency of the processed material, when the means on the circumference of the opener roller **21** in cooperation with the feeding roller **13** and the holding-down member **14** open the material.

The shape of the feeding teeth **131** exhibits in the direction of the feeding roller **13** rotation and thus in the direction of action of the feeding tooth **131** a high adhesive capacity, in the opposite direction is the adhesive capacity low.

During processing of recyclable planar textile formations of a high consistency the shape of the feeding teeth **131** of the feeding roller **13** cannot prevent drawing the processed material by the opener roller **21** off the feeding teeth **131.** In this case there is not an efficient opening on the opener roller **21** and the background art does not provide recycling of such materials.

According to the invention is this drawback eliminated by using holding-down teeth **132** and/or holding-down heads **1332** of the double teeth **133,** whose backs are oriented in the direction of rotation of the feeding roller **13** and their faces point against the movement of the processed material. The processed basic material is by the holding-down teeth **132** or the holding-down heads **1332** of the double teeth **133** held-down due to the orientation of the heads of the holding-down teeth **132** or the holding-down heads **1332** of the double teeth **133** against the direction of the feeding roller **13** rotation. The circumferential speed of the feeding roller **13** is lower than the circumferential speed of the opener roller **21.** The resistance of the processed material against drawing the processed material off the feeding teeth **131** or the feeding heads **1331** of the double teeth **133** is higher than the processed material strength resulting in its desirable destruction and opening by devices of the opener roller **21** circumference of the first opening and cleaning compartment **2.**

According to the invention the shape of the holding-down teeth **132** and the holding-down heads **1332** of the double teeth **133** is different from the shape of the feeding teeth **131** or the feeding heads **1331.** The advantageous shape of the feeding tooth **131** or the feeding head **1331** has a very low angle **1311** of the front, e.g. zero rake, which lowers the risk of choking the space in front of the face by stuffed parts of processed material and the processed material is on time and easily drawn off by the opener roller **21** from the surface of the feeding roller **13.** The angle of the tooth front **1311** is the angle made by a line **1312,** where the side projection of the tooth front is located and a line **1313** intersecting the tooth cutting edge and located on the perpendicular line to the feeding roller axis **13.**

The advantageous shape of the holding-down teeth **132** or the holding-down heads **1332** has the angle of the tooth front substantially higher inducing holding-down the fed material by the feeding roller **13** and simplification of the opening process in particular in materials of a high consistency.

Another possibility of choking the surface of the feeding roller is a fibers and impurities capture and jam among the rows of the teeth **131, 132, 133,** or among individual spires of a row of teeth arranged in a vertical spiral on the surface of the feeding roller **13.** Because it is difficult from the manufacturing point of view to ensure zero play among the rows of the teeth or among the spires of the spiral, it is important to intentionally make this play so big so that no choking of impurities and fibers happened. Well-known constructions of continuous spirals are at the spiral basic for example fitted with a negative and positive wedge-shaped formation, which among the teeth arranged in a continuous spiral forms a continuous groove providing the desired play. In individual circumferential rows of teeth can the desired play be reached for instance by spacing rings, whose outside diameter is smaller than the diameter of the teeth root circle.

The advantage of the method of feeding recyclable textile and similar materials of a high consistency to the working means of the device for fibers production and the device for carrying out the method consists in reaching appropriate conditions for operation of the first opening and cleaning compartment **2** of the machine for fibers production in particular from recyclable textile formations of a high consistency. The shape of the teeth or their parts described in examples of embodiment can also be modified in another appropriate way. The use of particular shape of the teeth and their connection with the feeding roller **13** circumference relates among others on manufacturing and technological possibilities of the manufacturer of the feeding rollers. The essential feature of all embodiments is the orientation of the holding-down teeth **132** or the holding-down heads **1332** of the double teeth **133** against the direction of the feeding roller **13** rotation, by which is prevented drawing the processed material of a high consistency off the grip line **15** of the feeding device by the opener roller **21.**

## Claims

1. Method for feeding textile and/or similar materials, in particular materials of a high consistency intended for recycling with using the recycle as a basic material for textile and/or similar materials production, to working means of a device for fibers production, **characterized by** that the textile and/or similar material fed to the first opening and a cleaning compartment (2) of the device for fibers production is during feeding actively held-down by the surface of a feeding roller (13) and consequently are by an opener roller (21) opened also the end parts of the material shorter than the distance between a grip line (15) and the opener roller (21) of the first opening and cleaning compartment (2) is.

2. Device for fibers production according to the method as claimed in Claim 1, whose component part is a feeding device consisting of a feeding roller on its circumference fitted with one or more rows of feeding teeth or a continuous spiral composed of a row of feeding teeth, while the faces of the teeth are oriented in the direction of the feeding roller rotation, **characterized by** that the surface of the feeding roller (13) is fitted in addition to feeding teeth (131) with holding-down teeth (132), whose backs are oriented in the direction of the feeding roller (13) rotation.

3. Device for fibers production as claimed in Claim 2, **characterized by** that at least some of the teeth have a shape of double teeth (133) consisting of two heads (1331, 1332), while the faces of the feeding heads (1331) and the backs of the holding-down heads (1332) are oriented in the direction of the feeding roller (13) rotation.

4. Device for fibers production as claimed in Claim 2 or 3, **characterized by** that the number of the holding-down teeth (132) and the holding-down heads (1332) of the double teeth (133) is higher than the number of the feeding teeth (131) and the feeding heads (1331) of the double teeth (133) arranged on the entire surface of the feeding roller (13).

5. Device for fibers production as claimed in Claim 2, **characterized by** that the feeding teeth (131) and the holding-down teeth (132) of the feeding roller (13) regularly alternate on the circumference.

6. Device for fibers production as claimed in Claim 2, **characterized by** that at least among some of rows of the feeding teeth (131), whose faces are oriented in the direction of the feeding roller (13) rotation is positioned at least one row comprising the holding-down teeth (132), whose backs are oriented in the direction of the feeding roller (13) rotation.

7. Device for fibers production as claimed in Claim 2, **characterized by** that the rows of the feeding teeth (131) and the holding-down teeth (132) regularly alternate.
